# EUROPEAN PATENT SPECIFICATION

(11) **EP 1 483 106 B1**
(45) Date of publication and mention of the grant of the patent: **10.05.2006**
(21) Application number: 03722884.8
(22) Date of filing: 12.03.2003
(51) Int. Cl.: B29D 23/00, F24F 13/02, B29C 44/30

(54) **APPARATUS FOR REALIZING DUCTS FOR AIR CONDITIONING SYSTEMS AND DUCTS REALIZED WITH SAID APPARATUS**
VORRICHTUNG ZUM HERSTELLEN VON LUFTLEITUNGEN FÜR KLIMATISIERUNGSSYSTEME UND LUFTLEITUNGEN HERGESTELLT MIT DIESER VORRICHTUNG
APPAREIL PERMETTANT DE REALISER DES CONDUITS DESTINES A DES SYSTEMES DE CONDITIONNEMENT D'AIR ET CONDUITS REALISES A PARTIR DUDIT APPAREIL

(30) Priority: 13.03.2002 IT TO20020220
(43) Date of publication of application: 08.12.2004
(73) Proprietor: Librizzi, Giuseppe, 24061 Albano S. Alessandro (IT)
(72) Inventor: Librizzi, Giuseppe, 24061 Albano S. Alessandro (IT)
(74) Representative: Nemni, Raffaelo
(86) International application number: PCT/IB2003/001294
(87) International publication number: WO 2003/076171

(56) References cited:
- DE-A- 19 513 456
- DE-A- 19 629 678
- US-A- 3 088 392
- US-A- 4 087 501
- US-A- 5 918 644

## Description

The present invention relates to an apparatus and method thereof for realizing air conveying ducts in environmental conditioning systems, meaning with environmental conditioning even a simple heating and/or air ventilation and/or air renewal and/or air circulation through filters and/or vents, as well as to the realization of ducts with said apparatus.

Air conditioning systems realized with ducts having a cylindrical form made from galvanized and/or painted sheet are already known.

Manufacture of such ducts involves considerable costs, which are due both to the required workmanship and price of the material utilized. Additionally, the ducts so realized are very heavy due to the material being used, requiring adequate supports for their weight to be fastened to walls or ceilings, with further costs increase.

Moreover, the weight and material of such supports involves higher risks for the operators during setting up operations, requiring higher safety measures and consequent higher costs.

In order to obviate to the above drawbacks, ducts made from isolating material have been suggested, which are realized with sections having a quadrangular and/or rectangular cross-section connected to each other, such duct sections being typically obtained from hard foamed polyurethane plates coated with thin aluminium foils.

To this purpose, at least three V-shaped grooves are made on one surface of a flat plate made from isolating material, which provide the bending lines; then the plate is folded over itself along the above bending lines to form the section with a quadrangular cross-section; suitable angular sealing means (such as adhesive) are provided for fastening the two end sides of the plate to each other, usually along an angle of the duct section.

This procedure allows a drastic simplification of the complex process for realizing the ducts, as well as a reduction of their cost and weight; however, the ducts so obtained have necessarily a quadrangular cross-section, which may not have a good esthetical result for some in-sight applications of the ducts.

According to this procedure, the maximum length of the so obtained duct sections is restrained to the length of the plate from which they are made, which does not generally exceed four meter length due to machining requirements.

Therefore, longer duct sections cannot be used for realizing the duct as it would be desired for reducing the number of joints, with a relevant saving of connecting means between the duct sections and realization times.

Patent application No. IT TO2000A000761, filed in the name of the applicant of the present patent application, discloses the realization of ducts with a circular cross-section made from rigid foamed polyurethane.

Realization of such ducts is quite troublesome, requiring the use of expensive and complex equipment. Moreover, transportation of the ducts so obtained to the installation site is rather expensive, since only a few ducts can be carried at a time due to the voluminous space they require.

Therefore, it is the object of the present invention to solve the above drawbacks.

In this general frame, a first object of the present invention is to provide an apparatus and method thereof for realizing ducts with a circular cross-section for conveying air in conditioning systems, which are made from foamed material, in particular polyurethane, having a predetermined consistent outer diameter and superficial coating, so as to obtain an esthetical configuration being apt for in-sight applications.

A further object of the present invention is to provide a simple efficient method for realizing ducts with a cylindrical form made from foamed material and superficially coated, for conveying air in conditioning systems.

Another object of the present invention is to provide an apparatus for realizing ducts, where the lengthwise movement of the duct is transferred directly by the forming means.

Another object of the present invention is to provide a duct with a cylindrical form for conveying air in conditioning systems, which can be realized with an esthetical configuration being apt for in-sight applications, having a limited weight and cost.

Another object of the present invention is to provide a duct with a cylindrical form for conveying air in conditioning systems, which can be realized with a polyurethane foam density such to ensure a self-bearing rigidity, i.e. which does not require to be assembled to other ducts for support.

A further object of the present invention is to provide a duct with a cylindrical form for conveying air in conditioning systems, which may consist of duct sections with a length such to reduce their number for the realization of the duct.

A further object of the present invention is to provide realization of a cylindrical duct, for which transportation costs to its utilization site may be reduced.

In order to achieve one or more of such aims, it is the object of the present invention to provide an apparatus and method thereof for the realization of ducts for conveying air in conditioning systems, a method for realizing said ducts, as well as the ducts so realized, incorporating the features of the annexed claims, which form an integral part of the description herein.

Further objects, features and advantages of the present invention will become apparent from the following detailed description and annexed drawings, which are supplied by way of non limiting example, wherein:
- Fig. 1 shows schematically a plan view of an apparatus for realizing the ducts according to the present invention;
- Fig. 2 shows schematically a partial side view of a portion of an apparatus for realizing the ducts according to the present invention;
- Fig. 3 shows schematically a partial side view of a portion of an apparatus for realizing the ducts according to the present invention;
- Fig. 4 shows schematically a section along the axis A-A of Figure 2, of an apparatus for realizing the ducts according to the present invention;
- Fig. 5 shows schematically a section along the axis B-B of Figure 4, of an apparatus for realizing the ducts according to the present invention;
- Figs. 6 and 7 show schematically a front view of a component for realizing the inner and outer side of the ducts, respectively, according to the present invention;
- Fig. 8 shows a duct section in a semi-machined form, according to the present invention;
- Figs. 9 and 10 show an enlarged view of the ends of the duct side of Figure 8 in its finished form, according to the present invention;
- Fig. 11 shows a perspective partial view of the duct according to the present invention.

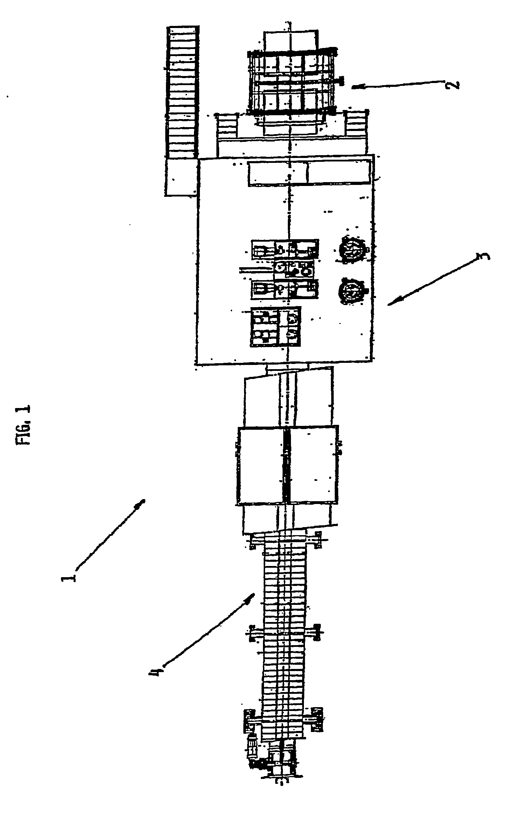

In Figure 1, representing schematically a plan view of an apparatus for the realization of ducts for conveying air in conditioning systems according to the present invention, reference 1 indicates the apparatus.

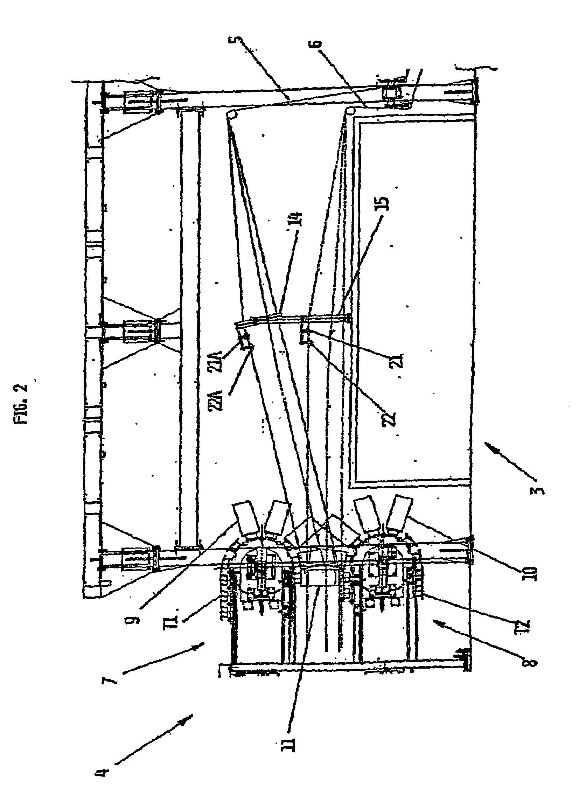

The apparatus 1 consists of a plurality of machining stations, where reference 2 indicates a station housing the coils wound with a band of the coating material of the duct, reference 3 indicates a station located on two levels for conveying the coating band from the station 2 and the forming mix of the polyurethane foam for the injection of the components for duct realization. The station 3 for conveying the coating band will be described later with reference to the Figures 2, 4 and 5. Reference 4 indicates a duct forming station, which will be described later with reference to the Figures 2, 3, 6 and 7.

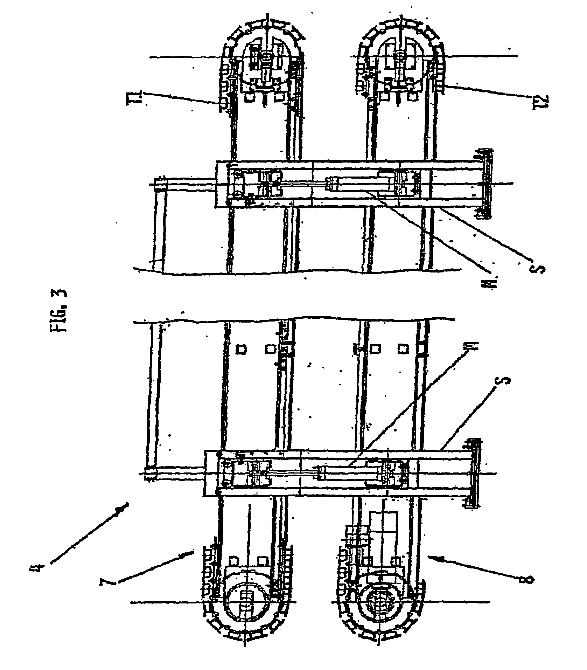

In the Figures 2 and 3, representing schematically a partial side view of a first portion of an apparatus and a partial side view of a second portion of an apparatus for realizing the ducts according to the present invention, reference 3 indicates the station for conveying the duct coating band and 4 a partial view of the station for duct forming.

Reference 5 indicates an inner coating band of the duct, whereas 6 indicates an outer coating band of the duct, such as thin aluminium bands on a respective reel coming from the station 2. The station 3 for conveying the coating band comprises at least two reels, one reel wound with the inner coating band 5 and the other reel wound with the outer coating band 6; since the station 3 is commonly known, it is not described herein.

The forming station 4 of the duct comprises two slat conveyor belts indicated with 7 and 8, respectively, which are arranged one on top of the other, appropriately spaced from each other. Both slat conveyor belts 7 and 8 have substantially an elongated ring shape with semicircular heads; the linear movement of one conveyor belt is in the opposite direction of the linear movement of the other, to have the portions of the two conveyor belts opposed to each other move linearly in the same direction.

The movement of one conveyor belt is timed with the movement of the other and is obtained by means of one transmitting means alone.

The motion of the conveyor belts is provided by common means, such as an electric motor with relevant gear reducer.

Both the support and mutual position of the two conveyor belts is ensured through a plurality of supports S (see Figure 3), which have means M for adjusting the distance between the two conveyor belts 7 and 8; in fact, the distance between both conveyor belts may be changed depending on the size of the duct to be realized.

The means M consist of actuators, such as oleo-dynamic actuators contained in every support S, which are known and will not be described herein.

The slats of every conveyor belt indicated with T1 and T2, respectively, are arranged symmetrically to the slats of the other conveyor belt (see Figure 3).

Each slat T1 of the conveyor belt 7 has a semi-mould 9 fastened to it and each slat T2 of the conveyor belt 8 a semi-mould 10 (for simplicity's sake, only a few of them are represented in Figure 2 and none in Figure 3).

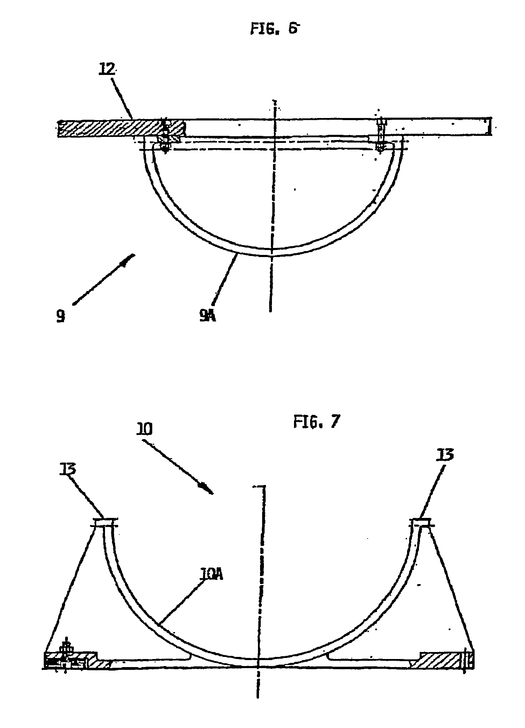

The semi-mould 9 has a semi-cylindrical convex form 9A, the outer dimensions of which correspond to the inner dimensions of the duct to be realized; the semi-mould 10 has a semi-cylindrical concave form 10A, the inner dimensions of which correspond to the outer dimensions of the duct to be realized (see Figures 6 and 7).

The semi-moulds 9 and 10 are moved linearly by their respective conveyor belts, so when they lay on the straight path of the relevant conveyor belt opposed to the straight path of the other conveyor belt, they are inserted one inside the other to form a complete mould 11 for the realization of the duct.

At the end of the straight path, where they are inserted into each other to form a mould 11, the semi-moulds 9 and 10 separate and cover each one a semicircular path before entering the opposed straight path; after covering this straight path, where both the semi-moulds 9 and 10 are idle, they will cover a semicircular path and then enter the straight path where both the semi-moulds 9 and 10 enter into each other and become operative for realizing the duct.

The semi-mould 9 has an upper flange 12 protruding from both ends being apt to strike against an edge 13 on each end of the semi-mould 10 (see Figures 6 and 7) for the closure of the two semi-moulds when the latter are inserted into each other on the conveyor belt path where the slats move in the same direction.

In this position, a gap will ensue between the outer side of the semi-mould 9 and inner side of the semi-mould 10, determining the thickness of the duct to be realized; this gap is due to the radius of the convex portion 9A of the semi-mould 9 and radius of the concave portion 10A of the semi-mould 10 being concentric and to the radius of the convex portion 9A of the semi-mould 9 being smaller than the radius of the concave portion 10A of the semi-mould 10.

The radius of the convex portion 9A determines the inner size of the duct, whereas the radius of the concave portion 10A determines the outer size of the duct. Therefore, both the size and thickness of the duct can be changed through a change of the dimensions of both semi-moulds.

The number of semi-moulds 9 and 10 on the relevant slat conveyor belts 7 and 8 is such, that on the straight path each semi-mould is in contact with both the previous and subsequent semi-moulds, thus obtaining one sole mould 11, which is as long as the straight path of the slat conveyor belt.

The linear movement of the semi-moulds 9 and 10 coupled to each other also determines a linear movement of the duct being formed between the moulds 11.

As a result, when the semi-moulds 9 and 10 separate from each other at the end of the straight path, in which the two semi-moulds 9 and 10 are inserted into each other, the duct will continue to move lengthwise being pulled by the movement of the subsequent moulds 11. Therefore, realization of the duct is continuous without stops.

This movement of the duct is provided by the duct outer and inner surfaces adhering to the relevant semi-moulds 9 and 10 following the polyurethane foaming between the two inner and outer coating foils.

References 14 and 15 indicate two forming means of the inner coating band 5 and outer coating band 6, respectively. Said forming means 14 and 15 are apt to change the band fed from a coil located upstream from its flat form to a semi-cylindrical form substantially equal to the dimensions of the inner diameter and outer diameter of the duct section, respectively.

This configuration is required to provide a suitable form to the two coating foils for their insertion between the moulds 11. As mentioned above, the width of these two coating foils fed from a coil on which they are wound is at least equal to the extension of the inner and outer surface of the duct; therefore, the band width is larger than the inner diameter of the mould 11, so the foils having that size would not be able to be inserted between the moulds 11.

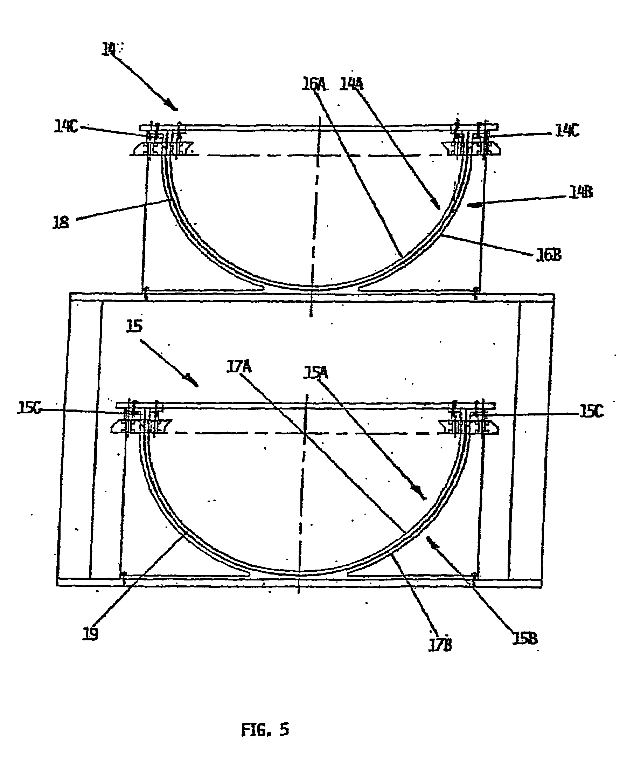

The forming means 14 and 15 consist each one of two elements 14A-14B and 15A-15B, respectively, with a semicircular portion 16A-16B and 17A-17B, respectively, which joins two vertical ends 14C and 15C. Both elements 14A-14B and 15A-15B are coupled concentrically one inside the other; their relevant outer radius of the semicircular portion 16A and 17A is smaller than the inner radius of the respective elements 16B and 17B, with a respective port 18 and 19 between the two coupled elements, the dimension of which will let both the inner and outer coating band go through, respectively (see Figure 5).

References 21 and 22 indicate two pairs of rollers coupled downstream of the forming means 14 in line with the vertical ends 14C; references 21A and 22A indicate two other pairs of rollers coupled downstream of the forming means 15 in line with the vertical ends 15C.

Both roller pairs 21-22 and 21A-22A have a profile being apt for bending the top end of the band fed from its relevant forming means, so that the edge of the inner band 5 is bent towards the outer band 6 and the edge of the band 6 towards the band 5. This bending of the edge of the two bands is performed to hinder the polyurethane foam from exiting the duct edge and penetrate between the semi-moulds 9-10 and relevant coating band, which would cause finishing problems of the duct, should for instance the extension of the coating foils not be large enough for a complete coverage of the outer and/or inner semi-circumference cross-section of the duct (which may happen due to the tolerances of the duct thickness and foil size); therefore, a larger extension of the coating foils is always used to ensure a safety margin.

Following their progressive advancement, the two coating foils conformed as above and containing the polyurethane foaming mix will come in contact with the semi-moulds 9 and 10, which are terminating their outer straight path and will cover the inner straight path.

Thus, the bent ends of the two coating foils come in contact with the stirrup 12 of the semi-mould 9, which will keep them in position when the filling foam of the gap expands between the two semi-moulds 9 and 10.

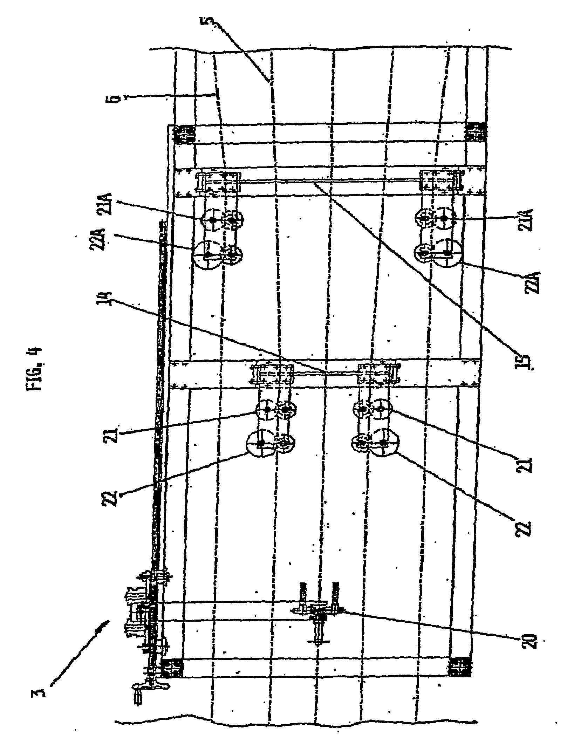

Reference 20 (see Figure 4) indicates an injection unit of the mix components for the forming of the polyurethane foam and realization of the duct. Injection of the components is realized inside the conformed coating band 6.

The position of the foaming unit with respect to the forming station 4 depends on the reaction times of the components in relation to the volume to be occupied by the foam, as provided by the size and thickness of the duct.

A reaction of the polyurethane foam mix should in fact occur when the semi-moulds 9 and 10 are already inserted into each other; should a reaction of the foam mix occur beforehand, its expansion would be opposed by the two coating bands only and not by the semi-moulds 9 and 10 inserted into each other, causing a deformation of the two coating bands and hinder their passage through the two semi-moulds 9 and 10.

As it can be presumed, the two coating foils tend to adhere to each other. The semicircular form is provided by the expansion of the polyurethane foam following a reaction of the mix injected between the two foils. This expansion causes the outer coating foil to adhere to the semi-mould 10, whereas the inner coating foil will adhere to the semi-mould 9, thus producing the duct.

Downstream of the apparatus 1 some units, not represented in the figures, provide for the finishing and lengthwise cutting of the duct, as described later with reference to the duct realization according to the present invention.

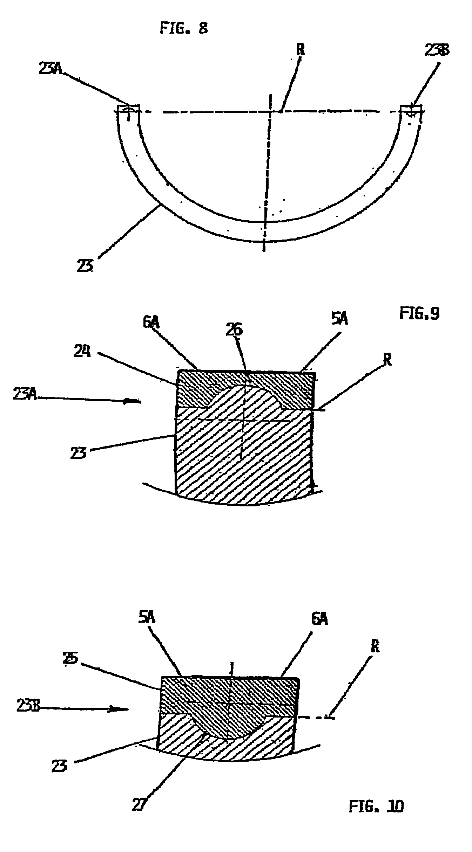

With reference to the Figure 8, representing the front view of a semi-duct according to the present invention, reference 23 indicates a semi-duct realized with the apparatus 1. References 23A and 23B indicate the ends of the semi-duct 23, which end beyond the axis R of the radius of the semicircular portion.

Referring to the Figures 9 and 10, representing the ends 23A and 23B of the semi-duct 23 in an enlarged scale, reference 5A indicates the edge of the inner coating bent to the outside of the duct 23 and 6A indicates the edge of the outer coating bent to the inner side of the semi-duct 23.

As previously mentioned, the bending of the outer and inner coating edges of the semi-duct is obtained through the respective pairs of rollers 21-22 and 21A-22A at the forming means outlet.

References 24 and 25 indicate a portion of the ends 23A and 23B, which is removed by one of the units located downstream of the apparatus 1.

A removal of the portions 24 and 25 has the purpose of bringing the end top plane to the level of the axis R of the radius of the semi-duct 23, so as to make it substantially semicircular.

A removal of the portion 24 from the end 23A is only partial, since a semicircular protuberance 26 is left in the thickness centre, whereas the removal of the portion 25 from the end 25B is total, obtaining a throat 27 with a semicircular section, the size of which is such to be coupled to the protuberance 26. Both the protuberance 26 and throat 27 are realized all over the length of the semi-duct 23.

The semi-duct 23 is now ready for its lengthwise cutting into separate sections suitable for stocking and transportation to the site where the canalization has to be realized.

Downstream of the realization unit of the semi-duct end 23 a second unit is provided for the lengthwise cutting of the semi-duct 23. This second unit is not represented in the figures and will not be described herein as being known.

The above operations are performed with the semi-duct moving linearly; therefore, the lengthwise cutting of the duct section is no longer restrained to the plate length as for the common art, but a longer length can be obviously cut with a corresponding reduction of the number of sections required for realizing the duct and of the means for connecting the sections to each other, with a consequent saving of both the connecting means and assembly time.

Realization of the semi-duct with the apparatus 1 provides the following steps:
- feeding the outer coating band 6 manually into the forming means 15 for its semi cylindrical configuration,
- inserting the band edges 6 fed from the forming means 15 between the rollers 21 and 22 for their configuration,
- inserting the band 6 so conformed between the first pair of semi-moulds 9 and 10 arranged one into the other,
- feeding the inner coating band 5 manually into the forming means 14 for its semi-cylindrical configuration,
- inserting the band edges 5 fed from the forming means 14 between the rollers 21 and 22 for their configuration,
- inserting the band 5 so conformed between the first pair of semi-moulds 9 and 10 arranged one into the other, above the outer coating band 6,
- inserting a thickness between the two coating bands for the band 5 to adhere to the semi-mould 9 and band 6 to the semi-mould 10,
- starting both conveyor belts 7 and 8, which put the semi-moulds 9 and 10 in motion so that the first pair of semi-moulds 9 and 10 inserted into each other will start pulling the two bands 5 and 6 along the straight path,
- injecting through the unit 20 the components mix for foaming the material of the semi-duct 23 inside the gap formed between the two coating foils,
- removing a portion of the ends 23A and 23B of the semi-duct 23 for realizing the protuberance 26 on one end and the throat 27 on the other end, on the outlet path of the semi-duct from the semi-moulds 9 and 10,
- cutting the semi-duct in sections.

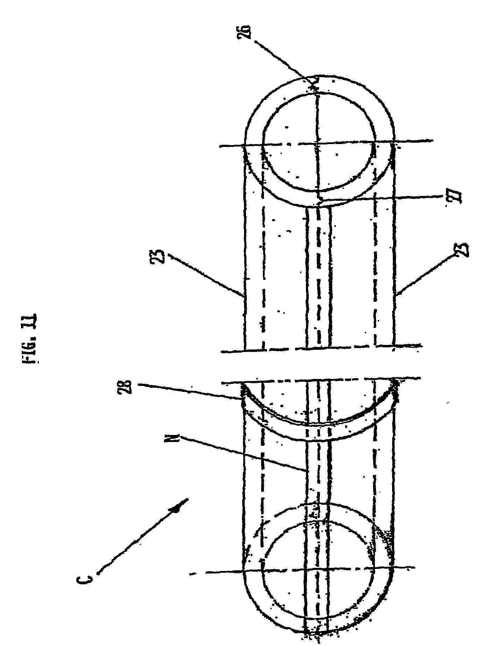

The Figure 11 is representing a perspective partial view of the cylindrical duct according to the present invention, where C indicates the duct, 23 indicates the semi-ducts realized with the apparatus 1 and N indicates an adhesive tape covering the joint between the two ducts 23.

The joint between the edges 23A and 23B of the two semi-ducts 23 is sealed to avoid possible outflows or losses of the air circulating in the duct C.

In order to avoid separation of the two ducts 23 from each other, the duct C has at least a clamp indicated with 28, placed around the outer circumference of the duct C.

This clamp 28 may be e.g. a simple plastic strap as it is used for packing closures.

The clamp 28 can be replaced by a metal clip, which keeps the two semi-ducts 23 joined together and has appropriate attachments for positioning and fastening the duct C to a wall and/or ceiling.

Realization of a complete duct C requires performance of the following steps:
- spreading an adhesive and/or sealing agent on the ends 23A and 23B of a semi-duct 23,
- overlapping a first semi-duct 23 overturned to a second semi-duct 23 for coupling the end protuberance 26 of one to the end throat 27 of the other, and/or vice-versa,
- covering the joint of both semi-ducts outside with an adhesive tape N,
- assembling at least a sealing and/or fastening clamp on the duct C.

The features of the apparatus and method thereof for realizing cylindrical ducts for conveying air in environmental conditioning systems are clear from the above description and annexed drawings.

From the above description also the advantages of the realization method of cylindrical ducts for conveying air in environmental conditioning systems according to the present invention are clear.

In particular they consist of:
- continuous realization of the semi-ducts 23;
- realization of the semi-ducts by means of a plurality of semi-moulds moving linearly and pulling the semi-duct to the semi-mould outlet;
- realization of semi-ducts with different outer and/or inner dimensions with easy semi-moulds replacement;
- realization of the cylindrical duct C using two semi-ducts 23 made from foamed polyurethane with the outer surface protected by a metal coating ensuring obvious esthetical advantages,
- realization of the cylindrical duct C using two semi-ducts 23 realized with a forming semi-mould for their outer diameter configuration, ensuring esthetical advantages of external uniformity;
- the cylindrical ducts C can be realized using a polyurethane foam with a higher density, which ensures a self-bearing rigidity;
- transportation of a larger number of semi-ducts from the manufacturing site to the work site;
- realization of the cylindrical duct C on the work site;
- the assembling and supporting means of the duct C do not require sturdy structures, due to the relatively low weight of the polyurethane duct;
- longer sections length;
- less joints required for duct realization;
- less risks for the assembly operators and less safety measures required due to the weight and material of the duct.

It is obvious that many other changes and applications can be easily adopted and applied by the man skilled in the art to the apparatus and method thereof for realizing cylindrical ducts for conveying air in environmental conditioning systems as well as to the cylindrical duct for conveying air in conditioning systems described above by way of example.

The duct section can have a cross-section differing from a circular section, such as an elliptic and/or oval cross-section, so as to reduce its height for those environments where the space from the ceiling to the floor cannot contain a cylindrical duct; however, always maintaining a size ensuring the same air flow-rate.

These variations can be easily obtained using mould configurations according to the desired cross-section.

It is obvious that many other changes and applications can be easily adopted and applied by the man skilled in the art to the apparatus and method thereof for realizing cylindrical ducts for conveying air in environmental conditioning systems as well as to the cylindrical duct for conveying air in conditioning systems described above by way of example.

## Claims

1. An apparatus for continuous realization of a duct (C) for conveying air in environmental air conditioning systems, the duct (C) being of a type comprising at least an outer (6) and an inner coating (5) and a rigid foamed isolating material located in between, said apparatus (1) comprising at least :
- a first station (2) for feeding an outer coating (6) and an inner coating (5),
- a.second station (3) for the configuration of the outer (6) and inner coating (5) and foaming (20),
- a third station (4) for forming a semi-duct (23) of said duct (C), said third station (4) comprising a plurality of means (11) moving lengthwise jointly, said plurality of means (11) being apt to form said semi-duct (23).

2. An apparatus according to claim 1, **characterized in that** said forming means (11) comprise at least a first semi-mould (9) and a second semi-mould (10).

3. An apparatus according to claim 2, **characterized in that** said first semi-mould (9) is apt for delimiting the inner size of said semi-duct (23).

4. An apparatus according to claim 2, **characterized in that** said second semi-mould (10) is apt for delimiting the outer size of said semi-duct (23).

5. An apparatus according to claim 2, **characterized in that** said first semi-mould (9) has a semi-cylindrical convex form (9A), the outer dimensions of which match the inner dimensions of said semi-duct (23).

6. An apparatus according to claim 2, **characterized in that** said second semi-mould (10) has a semi-cylindrical concave form (10A), the inner dimensions of which match the outer dimensions of said semi-duct (23).

7. An apparatus according to claim 1, **characterized in that** said third station (4) further comprises a first conveyor (7) and second conveyor (8), in particular a slat conveyor (T1,T2) symmetrically arranged one on top of the other and appropriately spaced from each other.

8. An apparatus according to claim 7, **characterized in that** said first conveyor (7) and said second conveyor (8) are apt for the lengthwise motion of said first semi-mould (9) and said second semi-mould (10).

9. An apparatus according to claim 7, **characterized in that** said slats (T1,T2) of said first conveyor (7) and said second conveyor (8) are symmetrically located between them.

10. An apparatus according to claim 7, **characterized in that** said first semi-mould (9) is jointly connected to said slats (T1) of said first conveyor (7).

11. An apparatus according to claim 7, **characterized in that** said second semi-mould (10) is jointly connected to said slats (T2) of said second conveyor (8).

12. An apparatus according to claim 2, **characterized in that** said first semi-mould (9) and said second semi-mould (10) are movable from a work position to an idle position.

13. An apparatus according to claim 12, **characterized in that** in said work position said first semi-mould (9) is placed concentrically inside said second semi-mould (10).

14. An apparatus according to claim 13, **characterized in that** the thickness of said semi-duct (23) is delimited between said first semi-mould (9) and said second semi-mould (10).

15. An apparatus according to claim 1, **characterized in that** said forming means (11) are placed sequentially one after the other, being in contact between them to form one sole forming means.

16. An apparatus according to one or more of the previous claims, **characterized in that** said first semi-mould (9) and said second semi-mould (10) cover at least a first straight path, where they are in their work position.

17. An apparatus according to one or more of the previous claims, **characterized in that** said first semi-mould (9) and said second semi-mould (10) cover at least a second straight path in parallel to said first straight path, where they are idle.

18. An apparatus according to one or more of the previous claims, **characterized in that** said first semi-mould (9) and said second semi-mould (10) cover at least a semicircular path.

19. An apparatus according to claim 1, **characterized in that** said second station (3) comprises first forming means (14,15) and second forming means (21,22;21A,21B).

20. An apparatus according to claim 19, **characterized in that** said first forming means (14,15) are apt for the semi-cylindrical configuration of said inner coating band (5) and said outer coating band (6).

21. An apparatus according to claim 19, **characterized in that** said second forming means (21,22;21A,21B) are apt for the configuration of the end of said inner coating band (5) and said outer coating band (6) exiting said first forming means (14,15).

22. An apparatus according to claim 20, **characterized in that** said first forming means (14,15) comprise at least a first element (14A,15A) and a second element (14B,15B) concentrically coupled one inside the other.

23. An apparatus according to claim 22, **characterized in that** said first element (14A,15A) and said second element (14B,15B) have a semi-circular portion (16A,16B,17A,17B) for jointing two vertical ends (14C,15C).

24. An apparatus according to claim 22, **characterized in that** a port (18,19), between said first element (14A,15A) and said second element (14B,15B) coupled to each other, is apt for letting said inner coating (5) and said outer coating (6) go through.

25. An apparatus according to claim 19, **characterized in that** said second forming means (21,22,21A,21B) comprise at least a pair of rollers coupled to each other located downstream of said first forming means (14,15).

26. An apparatus according to one or more of the previous claims, **characterized in that** the mutual position of said conveyor belts (7,8) changes depending on the dimensions of said semi-duct (23).

27. An apparatus according to one or more of the previous claims, **characterized in that** said outer coating foil (6) and said inner coating foil (5) of said semi-duct (23) are between said first semi-mould (9) and second semi-mould (10).

28. An apparatus according to claim 27, **characterized in that** said outer coating foil (6) and said inner coating foil (5) are made from metal material, in particular aluminium.

29. A method for realizing cylindrical ducts (C) for conveying air in conditioning systems, comprising the following steps:
- conveying at least two foils (5,6) to the forming station (4) for the inner and outer coating of a semi-duct (23),
- configuration of said foils (5,6) for their insertion between said movable forming means (11),
- insertion of said conformed foils (5,6) into said forming means (11),
- start-up of said conveyor belts (7,8) for the lengthwise motion of said forming means (11),
- injection of a components mix for foaming the material of said semi-duct (23) between said conformed foils (5,6),
- outlet of said semi-duct (23) from said forming means (11),
- finishing of said semi-duct (23).

30. A method according to claim 29, **characterized in that** said configuration of said coating foils (5,6) is determined at least by a first forming means (14,15), in particular for obtaining a determined curve for insertion between said forming means (11).

31. A method according to claim 29, **characterized in that** said forming means (11) are movable lengthwise jointly.

32. A method according to the previous claim, **characterized in that** said forming means (11) are located one after the other in contact with each other, forming one sole forming means.

33. A method according to the previous claim, **characterized in that** said forming means (11) cover at least a first straight path, where they are in their work position.

34. A method according to the previous claim, **characterized in that** at the end of said straight work path said forming means (11) separate into a first semi-mould (9) and a second semi-mould (10).

35. A method according to the previous claim, **characterized in that** said first semi-mould (9) and said second semi-mould (10) cover at least a second straight path in parallel to said first straight path, where they are idle.

36. A method according to one or more of the previous claims, **characterized in that** said first semi-mould (9) and said second semi-mould (10) cover at least a semicircular path.

37. A method according to claim 29, **characterized in that** said finishing of said semi-duct (23) comprises:
- cutting and partial removal of a portion (24) of one end (23A) of said semi-duct (23), in order to make it semicircular and obtain a semicircular protuberance (26),
- cutting and removal of a portion (25) of one end (23B) of said semi-duct (23), in order to make it semicircular and obtain a throat (27) with a semicircular cross-section,
- lengthwise cutting of said semi-duct (23).

38. A method according to claim 37, **characterized in that** said protuberance (26) and said throat (27) are obtained all over the length of the ends of said semi-duct (23), being apt to be mutually coupled.

39. A method according to claims 37 and 38, **characterized in that** said operations are realized with the semi-duct (23) in its linear movement.

40. A method according to claim 37, **characterized in that** it further comprises the following steps:
- spreading of an adhesive and/or sealing agent on said ends (23A,23B) of said semi-duct (23),
- overlapping a first semi-duct (23) overturned to a second semi-duct (23) for coupling said protuberance (26) on one end (23A) to said throat (27) on one end (23B) of the other semi-duct (23) and/or vice-versa,
- external application of an adhesive tape (N) to the joint of the two semi-ducts (23) for sealing purposes,
- application at least of a sealing and/or fastening clamp to the duct (C).

41. A duct (C) for conveying air in environmental conditioning systems, comprising at least an inner coating foil (5), at least an outer coating foil (6) and a rigid foamed isolating material (P) between said coatings (5,6), realized through the apparatus according to one or more of claim from 1 to 28 and/or the method according to one or more of claims from 29 to 40,
**characterized in that** it has substantially a cylindrical form, i.e. a circular cross-section or an elliptical and/or oval cross-section.

42. A duct according to the previous claim, **characterized in that** said inner coating foil (5) and said outer coating foil (6) are made from metal material, in particular aluminium.

43. A method according to claim 29, **characterized in that** said configuration of said coating foils (5,6) is determined at least by a second forming means (21,22;21A,22A), in particular for obtaining a determined shape on their ends.

## Patentansprüche

1. Apparat für die kontinuierliche Realisierung einer Leitung (C) für die Beförderung von Luft in Raumklimatisierungsanlagen, wobei die Leitung (C) einem Typ entspricht, der zumindest eine externe Verkleidung (6), eine interne Verkleidung (5) sowie ein Isoliermaterial aus Hartschaum zwischen den besagten Vorrichtung (1) aufweist, welcher zumindest aufweist:
- eine erste Station (2) für die Speisung einer externen Verkleidung (6) und einer internen Verkleidung (5);
- eine zweite Station (3) für die Konfigurierung der externen (6) und der internen (5) Verkleidung und des Schaums (20);
- eine dritte Station (4) für die Realisierung einer Halbleitung (23) der besagten Leitung (C),
wobei die besagte dritte Station (4) eine Vielzahl von Vorrichtungen (11) für die gemeinsame Bewegung in Längsrichtung aufweist, wobei die besagte Vielzahl von Vorrichtungen (11) zur Bildung der besagten Halbleitung (23) geeignet ist.

2. Apparat gemäß Anspruch 1, **gekennzeichnet durch** die Tatsache, dass die besagten Formungsvorrichtungen (11) zumindest eine erste Halbform (9) und eine zweite Halbform (10) aufweisen.

3. Apparat gemäß Anspruch 2, **gekennzeichnet durch** die Tatsache, dass die die erste Halbform (9) zur Begrenzung der internen Abmessungen der besagten Halbleitung (23) geeignet ist.

4. Apparat gemäß Anspruch 2, **gekennzeichnet durch** die Tatsache, dass die besagte Halbform (10) zur Begrenzung der externen Abmessungen der besagten Halbleitung (23) geeignet ist.

5. Apparat gemäß Anspruch 2, **gekennzeichnet durch** die Tatsache, dass die erste Halbform (9) eine halbzylindrische konvexe Form (9A) aufweist, deren externen Abmessungen den internen Abmessungen der besagten Halbleitung (23) entsprechen.

6. Apparat gemäß Anspruch 2, **gekennzeichnet durch** die Tatsache, dass die besagte zweite Halbform (10) ein halbzylindrische konkave Form (10A) aufweist, deren interrien Abmessungen den externen Abmessungen der besagten Halbleitung (23) entsprechen.

7. Apparat gemäß Anspruch 1, **gekennzeichnet durch** die Tatsache, dass die besagte dritte Station (4) ebenfalls ein erstes Transportband (7) und ein zweites Transportband (8) umfasst, insbesondere einen Transportteppich (T1, T2), die symmetrisch in angemessenem Abstand übereinander angeordnet sind.

8. Apparat gemäß Anspruch 7, **gekennzeichnet durch** die Tatsache, dass das besagte erste Transportband (7) und das besagte zweite Transportband (8) für die Bewegung der besagten ersten Halbform (9) und der besagten zweiten Halbform (10) in Längsrichtung geeignet sind.

9. Apparat gemäß Anspruch 7, **gekennzeichnet durch** die Tatsache, dass die besagten Transportteppiche (T1, T2) des besagten ersten Transportbands (7) und des besagten zweiten Transportbands (8) symmetrisch zueinander angeordnet sind.

10. Apparat gemäß Anspruch 7, **gekennzeichnet durch** die Tatsache, dass die besagte erste Halbform (9) fest mit den besagten Transportteppichen (T1) des besagten ersten Transportbands (7) verbunden ist.

11. Apparat gemäß Anspruch 7, **gekennzeichnet durch** die Tatsache, dass die besagte zweite Halbform (10) fest mit dem besagten Transportteppichen (T2) des besagten zweiten Transportbands (8) verbunden ist.

12. Apparat gemäß Anspruch 2, **gekennzeichnet durch** die Tatsache, dass die besagte erste Halbform (9) und die besagte zweite Halbform (10) aus einer Ruhestellung in eine Arbeitsstellung bewegt werden können.

13. Apparat gemäß Anspruch 12, **gekennzeichnet durch** die Tatsache, dass die besagte erste Halbform (9) in der besagten Arbeitsstellung konzentrisch in der besagten zweiten Halbform (10) angeordnet ist.

14. Apparat gemäß Anspruch 13, **gekennzeichnet durch** die Tatsache, dass die Stärke der besagten Halbleitung (23) zwischen der besagten ersten Halbform (9) und der besagten zweiten Halbform (10) begrenzt wird.

15. Apparat gemäß Anspruch 1, **gekennzeichnet durch** die Tatsache, dass die besagten Formungsvorrichtungen (11) nacheinander angebracht und miteinander in Kontakt sind, sodass sie eine einzige Formungsvorrichtung bilden.

16. Apparat gemäß einem oder mehreren der vorausgehenden Ansprüche, **gekennzeichnet durch** die Tatsache, dass die erste Halbform (9) und die zweite Halbform (10) zumindest einen ersten gradlinigen Weg abdecken, auf dem sie sich in ihrer Arbeitsstellung befinden.

17. Apparat gemäß einem oder mehreren der vorausgehenden Ansprüche, **gekennzeichnet durch** die Tatsache, dass die erste Halbform (9) und die zweite Halbform (10) zumindest einen zweiten gradlinigen Weg abdecken, der sich parallel zu dem besagten ersten gradlinigen Weg befindet, wenn sie sich in der Ruhestellung befinden.

18. Apparat gemäß einem oder mehreren der vorausgehenden Ansprüche, **gekennzeichnet durch** die Tatsache, dass die erste Halbform (9) und die zweite Halbform (10) zumindest einen halbrunden Weg abdecken.

19. Apparat gemäß Anspruch 1, **gekennzeichnet durch** die Tatsache, dass die besagte zweite Station (3) erste Formungsvorrichtungen (14, 15) und zweite Formungsvorrichtungen (21, 22, 21A, 21B) umfasst.

20. Apparat gemäß Anspruch 19, **gekennzeichnet durch** die Tatsache, dass die besagten ersten Formungsvorrichtungen (14, 15) zur halbzylindrischen Konfigurierung des besagten internen Verkleidungsbands (5) und des besagten externen Verkleidungsbands (6) geeignet sind.

21. Apparat gemäß Anspruch 19, **gekennzeichnet durch** die Tatsache, dass die besagten zweiten Formungsvorrichtungen (21, 22, 21A, 21B) zur Konfigurierung des Endes des besagten internen Verkleidungsbands (5) und des besagten externen Verkleidungsbands (6) geeignet sind, die aus den besagten ersten Formungsvorrichtungen (14, 15) überstehen.

22. Apparat gemäß Anspruch 20, **gekennzeichnet durch** die Tatsache, dass die besagten ersten Formungsvorrichtungen (14, 15) zumindest ein erstes Element (14A, 15A) und ein zweites Element (14B, 15B) umfassen, die konzentrisch ineinander verbunden sind.

23. Apparat gemäß Anspruch 22, **gekennzeichnet durch** die Tatsache, dass das besagte erste Element (14A, 15A) und das besagte zweite Element (14B, 15B) einen halbrunden Teil (16A, 16B, 17A, 17B) zur Verbindung der vertikalen Enden (14C, 15C) aufweisen.

24. Apparat gemäß Anspruch 22, **gekennzeichnet durch** die Tatsache, dass eine Öffnung (18, 19) zwischen dem besagten ersten Element (14A, 15A) und dem besagten zweiten Element (14B, 15B), die miteinander verbunden sind, zum Durchlassen der besagten internen Verkleidung (5) und der besagten externen Verkleidung (6) geeignet ist.

25. Apparat gemäß Anspruch 19, **gekennzeichnet durch** die Tatsache, dass die zweiten Formungsvorrichtungen (21, 22, 21 A, 21 B) zumindest ein Paar miteinander verbundene Walzen aufweist, die den besagten ersten Formungsvorrichtungen (14, 15) nachgeschaltet sind.

26. Apparat gemäß einem oder mehreren der vorausgehenden Ansprüche, **gekennzeichnet durch** die Tatsache, dass sich die gegenseitige Position der besagten Transportbänder (7, 8) in Abhängigkeit von den Abmessungen der besagten Halbleitung (23) ändert.

27. Apparat gemäß einem oder mehreren der vorausgehenden Ansprüche, **gekennzeichnet durch** die Tatsache, dass sich das besagte externe Verkleidungsblech (6) und das besagte interne Verkleidungsblech (5) der besagten Halbleitung (23) zwischen der besagten ersten Halbform (9) und der besagten zweiten Halbform (10) befinden.

28. Apparat gemäß Anspruch 27, **gekennzeichnet durch** die Tatsache, dass das besagte externe Verkleidungsblech (6) und das besagte interne Verkleidungsblech (5) aus Metallmaterial und insbesondere aus Aluminium gefertigt sind.

29. Verfahren zur Realisierung von zylindrischen Leitungen (C) für die Beförderung von Luft in Klimatisierungsanlage, das die folgenden Phasen umfasst:
- Förderung von zumindest zwei Blechen (5, 6) zu einer Formungsstation (4) für die interne und die externe Verkleidung einer Halbleitung (23);
- Konfigurierung der besagten Bleche (5, 6) für ihre Einführung zwischen die besagten beweglichen Formungsvorrichtungen (11);
- Einführung der besagten geformten Bleche (5, 6) in die besagten Formungsvorrichtungen (11);
- Start der Transportbänder (7, 8) für eine Bewegung der besagten Formungsvorrichtungen
(11) in Längsrichtung;
- Einspritzung einer Mischung von Komponenten zum Ausschäumen des Materials der besagten Halbleitung (23) zwischen den besagten geformten Blechen (5, 6);
- Auslauf der besagten Halbleitung (23) aus den besagten Formungsvorrichtungen (11);
- Fertigstellung der besagten Halbleitung (23).

30. Verfahren gemäß Anspruch 29, **gekennzeichnet durch** die Tatsache, dass die besagte Konfigurierung der besagten Verkleidungsbleche (5, 6) **durch** zumindest eine erste Formungsvorrichtung (14, 15) bestimmt wird, insbesondere zur Erzielung einer bestimmten Kurve für die Einführung zwischen den besagten Formungsvorrichtungen (11).

31. Verfahren gemäß Anspruch 29, **gekennzeichnet durch** die Tatsache, dass die besagten Formungsvorrichtungen (11) gemeinsam in Längsrichtung beweglich sind.

32. Verfahren gemäß dem vorausgehenden Anspruch, **gekennzeichnet durch** die Tatsache, dass die besagten Formungsvorrichtungen (11) nacheinander angebracht sind, miteinander in Kontakt stehen und eine einzige Formungsvorrichtung bilden.

33. Verfahren gemäß dem vorausgehenden Anspruch, **gekennzeichnet durch** die Tatsache, dass die besagten Formungsvorrichtungen (11) zumindest einen ersten gradlinigen Weg abdecken, wenn sie sich in der Arbeitsstellung befinden.

34. Verfahren gemäß dem vorausgehenden Anspruch, **gekennzeichnet durch** die Tatsache, dass die besagten Formungsvorrichtungen (11) sich am Ende des besagten gradlinigen Wegs in eine erste Halbform (9) und eine zweite Halbform (10) trennen.

35. Verfahren gemäß dem vorausgehenden Anspruch, **gekennzeichnet durch** die Tatsache, dass die besagte erste Halbform (9) und die besagte zweite Halbform (10) zumindest einen gradlinigen Weg parallel zum besagten ersten gradlinigen Weg abdecken, wenn sie sich in der Ruhestellung befinden.

36. Verfahren gemäß einem oder mehreren der vorausgehenden Ansprüche, **gekennzeichnet durch** die Tatsache, dass die erste Halbform (9) und die zweite Halbform (10) zumindest einen halbrunden Weg abdecken.

37. Verfahren gemäß Anspruch 29, **gekennzeichnet durch** die Tatsache, dass die besagte Fertigstellung der besagten Halbleitung (23) umfasst:
- Schnitt und partielle Entfernung eines Teils (24) eines Endes (23A) der besagten Halbleitung (23), um sie halbrund zu formen und um einen halbrunden Überstand (26) zu erzielen;
- Schnitt und Entfernung eines Teils (25) eines Endes (23B) der besagten Halbleitung (23), um sie halbrund zu formen und um eine Kehle (27) mit halbrundem Querschnitt zu erzielen;
- Schnitt der besagten Halbleitung (23) in Längsrichtung.

38. Verfahren gemäß Anspruch 37, **gekennzeichnet durch** die Tatsache, dass sich der besagte Überstand (26) und die besagte Kehle (27) auf der gesamten Länge der Enden der besagten Halbleitung (23) befinden, da sie zur Verbindung miteinander geeignet sind.

39. Verfahren gemäß den Ansprüchen 37 und 38, **gekennzeichnet durch** die Tatsache, dass die besagten Arbeitsschritte mit Halbleitung (23) in linearer Bewegung ausgeführt werden.

40. Verfahren gemäß Anspruch 37, **gekennzeichnet durch** die Tatsache, dass es ebenfalls die folgenden Phasen umfasst:
- Auftragen eines Klebers und/oder Versiegelungsmaterials auf den Enden (23A, 23B) der besagten Halbleitung (23);
- Aufbringen einer ersten umgedrehten Halbleitung (23) auf einer zweiten Halbleitung (23) zur Verbindung des besagten Überstands (26) an einem Ende (23A) mit der besagten Kehle (27) an einem Ende (23B) der anderen Halbleitung (23) und/oder umgekehrt;
- externe Anbringung von Klebeband (N) an der Verbindung der beiden Halbleitungen (23) zur Abdichtung;
- Anbringung von zumindest einer Dichtungs- und/oder Befestigungsmanschette an der Leitung (C).

41. Leitung (C) zur Beförderung von Luft in Raumklimatisierungsanlagen, welche zumindest ein internes Verkleidungsblech (5), zumindest ein externes Verkleidungsblech (6) und Isoliermaterial aus Hartschaum (P) zwischen den besagten Verkleidungen (5, 6) aufweist, realisiert mit einem Apparat gemäß einem der Ansprüche von 1 bis 28 und/oder dem Verfahren gemäß einem oder mehreren der Ansprüche von 29 bis 40, **gekennzeichnet durch** die Tatsache, dass sie eine im Wesentliche zylindrische Form aufweist, das heißt einen runden oder elliptischen und/oder ovalen Querschnitt aufweist.

42. Leitung gemäß einem der vorausgehenden Ansprüche, **gekennzeichnet durch** die Tatsache, dass das besagte interne Verkleidungsblech (5) und das besagte externe Verkleidungsblech (6) aus einem Metallmaterial und insbesondere aus Aluminium gefertigt werden.

43. Verfahren gemäß Anspruch 29, **gekennzeichnet durch** die Tatsache, dass die besagte Konfigurierung der besagten Verkleidungsbleche (5, 6) zumindest **durch** die besagten zweiten Formungsvorrichtungen (21, 22, 21A, 22A) bestimmt wird, insbesondere zur Erzielung einer bestimmten Form an ihren Enden.

## Revendications

1. Appareil pour la réalisation continue d'une conduite (C) pour acheminer de l'air vers des installations d'air ambiant, la conduite (C) étant d'un type comprenant au moins un revêtement externe (6), un revêtement interne (5) et un matériau d'isolation mousseux rigide placé entre cet appareil (1), comprenant au moins:
- un premier poste (2) pour l'alimentation d'un revêtement externe (6) et d'un revêtement interne (5);
- un deuxième poste (3) pour la configuration du revêtement externe (6) et interne (5) et de la mousse (20);
- un troisième poste (4) pour la réalisation d'une semi-conduite (23) de la dite conduite (C),
le dit troisième poste (4) comprenant une pluralité de moyens (11) destinés à se déplacer longitudinalement et conjointement, la dite pluralité de moyens (11) étant destinée à former la dite semi-conduite (23).

2. Appareil d'après la revendication 1, **caractérisé par le fait que** ces moyens de formage (11) comprennent au moins un premier semi-moule (9) et un second semi-moule (10).

3. Appareil d'après la revendication 2, **caractérisé par le fait que** le premier semi-moule (9) est destiné à délimiter les dimensions internes de la dite semi-conduite (23).

4. Appareil d'après la revendication 2, **caractérisé par le fait que** le dit semi-moule (10) est destiné à délimiter les dimensions externes de la dite semi-conduite (23).

5. Appareil d'après la revendication 2, **caractérisé par le fait que** le premier semi-moule (9) présente une forme convexe semi-cylindrique (9A), dont les dimensions externes correspondent aux dimensions internes de la dite semi-conduite (23).

6. Appareil d'après la revendication 2, **caractérisé par le fait que** le dit deuxième semi-moule (10) présente une forme concave semi-cylindrique (10A), dont les dimensions internes correspondent aux dimensions externes de la dite semi-conduite (23).

7. Appareil d'après la revendication 1, **caractérisé par le fait que** le dit troisième poste (4) comprend également une première bande transporteuse (7) et une seconde bande transporteuse (8), en particulier une bande transporteuse à galets (T1, T2), disposées symétriquement l'une au-dessus de l'autre et d'une manière adéquate espacées l'une par rapport à l'autre.

8. Appareil d'après la revendication 7, **caractérisé par le fait que** la dite première bande transporteuse (7) et la dite deuxième bande transporteuse (8) sont indiquées pour le mouvement longitudinal du dit premier semi-moule (9) et du dit deuxième semi-moule (10).

9. Appareil d'après la revendication 7, **caractérisé par le fait que** les dits galets (T1, T2) de la dite première bande transporteuse (7) et la dite deuxième bande transporteuse (8) sont disposés symétriquement entre eux.

10. Appareil d'après la revendication 7, **caractérisé par le fait que** le dit premier semi-moule (9) est solidairement raccordé aux dits galets (T1) de la dite première bande transporteuse (7).

11. Appareil d'après la revendication 7, **caractérisé par le fait que** le dit deuxième semi-moule (10) est solidairement raccordé aux dits galets (T2) de la dite deuxième bande transporteuse (8).

12. Appareil d'après la revendication 2, **caractérisé par le fait que** le dit premier semi-moule (9) et du dit deuxième semi-moule (10) sont mobiles d'une position de travail à une position de repos.

13. Appareil d'après la revendication 12, **caractérisé par le fait que**, dans la dite position de travail, le dit premier semi-moule (9) est disposé de façon concentrique à l'intérieur du dit semi-moule (10).

14. Appareil d'après la revendication 13, **caractérisé par le fait que** l'épaisseur de la dite semi-conduite (23) est délimitée entre le dit premier semi-moule (9) et le dit deuxième semi-moule (10).

15. Appareil d'après la revendication 1, **caractérisé par le fait que** les dits moyens de formage (11) sont disposés séquentiellement l'un après l'autre, étant en contact entre eux de manière à constituer un seul moyen de formage.

16. Appareil d'après une ou plusieurs revendications précédentes, **caractérisé par le fait que** le premier semi-moule (9) et le deuxième semi-moule (10) couvrent au moins un premier parcours rectiligne sur lequel ils se trouvent dans leur position de travail.

17. Appareil d'après une ou plusieurs revendications précédentes, **caractérisé par le fait que** le premier semi-moule (9) et le deuxième semi-moule (10) couvrent au moins un second parcours rectiligne parallèle au dit premier parcours rectiligne quand ils sont en position de repos.

18. Appareil d'après une ou plusieurs revendications précédentes, **caractérisé par le fait que** le premier semi-moule (9) et le deuxième semi-moule (10) couvrent au moins un parcours semi-circulaire.

19. Appareil d'après la revendication 1, **caractérisé par le fait que** le dit deuxième poste (3) comprend des premiers moyens de formage (14, 15) et des seconds moyens de formage (21, 22, 21A, 21B).

20. Appareil d'après la revendication 19, **caractérisé par le fait que** les dits premiers moyens de formage (14, 15) sont indiqués pour le configuration semi-cylindrique de la dite bande de revêtement interne (5) et de la dite bande de revêtement externe (6).

21. Appareil d'après la revendication 19, **caractérisé par le fait que** les dits seconds moyens de formage (21, 22, 2 1 A, 21B) sont indiqués pour la configuration de l'extrémité de la dite bande de revêtement interne (5) et de la dite bande de revêtement externe (6) dépassant de ces premiers moyens de formage (14, 15).

22. Appareil d'après la revendication 20, **caractérisé par le fait que** les dits premiers moyens de formage (14, 15) comprennent au moins un premier élément (14A, 15A) et un second élément (14B, 15B) accouplés concentriquement l'un à l'intérieur de l'autre.

23. Appareil d'après la revendication 22, **caractérisé par le fait que** le dit premier élément (14A, 15A) et le dit deuxième élément (14B, 15B) présentent une partie semi-circulaire (16A, 16B, 17A, 17B) pour unir deux extrémités verticales (14C, 15C).

24. Appareil d'après la revendication 22, **caractérisé par le fait qu'**une ouverture (18, 19) entre le dit premier élément (14A, 15A) et le dit deuxième élément (14B, 15B), réciproquement accouplés, est indiquée pour permettre le passage du dit revêtement interne (5) et du dit revêtement externe (6).

25. Appareil d'après la revendication 19, **caractérisé par le fait que** les seconds moyens de formage (21, 22, 21A, 21B) comprennent au moins une paire de rouleaux réciproquement accouplés localisés en aval de ces premiers moyens de formage (14, 15).

26. Appareil d'après une ou plusieurs revendications précédentes, **caractérisé par le fait que** la position réciproque de ces bandes transporteuses (7, 8) change en fonction des dimensions de la dite semi-conduite (23).

27. Appareil d'après une ou plusieurs revendications précédentes, **caractérisé par le fait que** la dite feuille de revêtement externe (6) et la dite feuille de revêtement interne (5) de la dite semi-conduite (23) se trouvent entre le dit premier semi-moule (9) et le dit deuxième semi-moule (10).

28. Appareil d'après la revendication 27, **caractérisé par le fait que** la dite feuille de revêtement externe (6) et la dite feuille de revêtement interne (5) sont réalisées en matériau métallique, en particulier l'aluminium.

29. Méthode pour réaliser des conduites cylindriques (C) pour acheminer de l'air vers des installations de conditionnement comprenant les phases suivantes:
- acheminement d'au moins deux feuilles (5, 6) vers un poste de formage (4) pour le revêtement interne et externe d'une semi-conduite (23);
- configuration des dites feuilles (5, 6) pour leur introduction entre ces moyens de formage mobiles (11);
- introduction des dites feuilles formées (5, 6) à l'intérieur de ces moyens de formage (11);
- démarrage de ces bandes transporteuses (7, 8) pour le mouvement longitudinal de ces moyens de formage (11);
- injection d'un mélange de composants pour injecter sous forme de mousse le matériau de la dite semi-conduite (23) entre les dites feuilles formées (5, 6);
- sortie de la dite semi-conduite (23) de ces moyens de formage (11);
- finition de la dite semi-conduite (23).

30. Méthode d'après la revendication 29, **caractérisée par le fait que** la dite configuration des dites feuilles de revêtement (5, 6) est déterminée au moins par un premier moyen de formage (14, 15), en particulier pour obtenir une courbe déterminée pour l'introduction entre ces moyens de formage (11).

31. Méthode d'après la revendication 29, **caractérisée par le fait que** ces moyens de formage (11) sont mobiles longitudinalement conjointement.

32. Méthode d'après la revendication précédente, **caractérisée par le fait que** ces moyens de formage (11) sont localisés l'un à la suite de l'autre, en contact réciproque, en formant un seul moyen de formage.

33. Méthode d'après la revendication précédente, **caractérisée par le fait que** ces moyens de formage (11) couvrent au moins un premier parcours rectiligne quand ils se trouvent en position de travail.

34. Méthode d'après la revendication précédente, **caractérisé par le fait que** à la fin du dit parcours rectiligne ces moyens de formage (11) se séparent en un premier semi-moule (9) et un second semi-moule (10).

35. Méthode d'après la revendication précédente, **caractérisée par le fait que** le dit premier semi-moule (9) et le dit deuxième semi-moule (10) couvrent au moins un second parcours rectiligne parallèle au dit premier parcours rectiligne où ils se trouvent en position de repos.

36. Méthode d'après une ou plusieurs revendications précédentes, **caractérisée par le fait que** le premier semi-moule (9) et le deuxième semi-moule (10) couvrent au moins un parcours semi-circulaire.

37. Méthode d'après la revendication 29, **caractérisé par le fait que** la dite finition de la dite semi-conduite (23) comprend:
- découpe et enlèvement partiel d'une portion (24) d'une extrémité (23A) de la dite semi-conduite (23), de manière à la rendre semi-circulaire et obtenir une protubérance semi-circulaire (26);
- découpe et enlèvement d'une portion (25) d'une extrémité (23B) de la dite semi-conduite (23) afin de la rendre semi-circulaire et obtenir une gorge (27) avec une section transversale semi-circulaire;
- découpe longitudinale de la dite semi-conduite (23).

38. Méthode d'après la revendication 37, **caractérisée par le fait que** la dite protubérance (26) et la dite gorge (27) sont obtenues sur toute la longueur des extrémités de la dite semi-conduite (23) étant indiquées pour être réciproquement accouplées.

39. Méthode d'après les revendications 37 et 38, **caractérisée par le fait que** les dites opérations sont réalisées avec la semi-conduite (23) dans son mouvement linéaire.

40. Méthode d'après la revendication 37, **caractérisée par** le fait de comprendre également les phases suivantes:
- enduisage d'un agent adhésif et/ou scellant sur les dites extrémités (23A, 23B) de la dite semi-conduite (23);
- superposition d'une première semi-conduite (23) renversée/retournée sur une seconde semi-conduite (23) pour accoupler la dite protubérance (26), sur une extrémité (23A), à la dite gorge (27), sur une extrémité (23B) de l'autre semi-conduite (23) et/ou vice versa;
- application externe de ruban adhésif (N) sur le joint des deux semiconduites (23) pour obtenir l'étanchéité;
- application d'au moins un collier d'étanchéité et/ou fixation à la conduite (C).

41. Conduite (C) pour acheminer de l'air vers des installations de conditionnement ambiantes comprenant au moins une feuille de revêtement interne (5), au moins une feuille de revêtement externe (6) et du matériau isolante injecté rigide (P) sous forme de mousse entre ces revêtements (5, 6), réalisée par l'intermédiaire de l'appareil d'après l'une des revendications de 1 à 28 et/ou le méthode d'après une ou plusieurs revendications de 29 à 40, **caractérisée par** le fait de présenter une forme substantiellement cylindrique, c'est à dire une section transversale circulaire ou elliptique et/ou ovale.

42. Conduite d'après l'une des revendications précédentes, **caractérisée par le fait que** la dite feuille de revêtement interne (5) et la dite feuille de revêtement externe (6) sont réalisées en matériau métallique, en particulier l'aluminium.

43. Méthode d'après la revendication 29, **caractérisée par le fait que** la dite configuration des dites feuilles de revêtement (5, 6) est déterminée au moins par des seconds moyens de formage (21, 22, 21A, 22A), en particulier pour obtenir une forme déterminée à leurs extrémités.
